# EUROPÄISCHE PATENTANMELDUNG

(11) **EP 3 451 313 A1**
(43) Veröffentlichungstag der Anmeldung: **06.03.2019**
(21) Anmeldenummer: 18189413.0
(22) Anmeldetag: 16.08.2018
(51) Int. Cl.: G08G 1/16, B60W 30/09, E02F 9/24, E02F 9/26

(54) **VERFAHREN ZUR ERMITTLUNG EINER KOLLISIONSGEFAHR**

(30) Priorität: 01.09.2017 DE 102017215379
(71) Anmelder: Robert Bosch GmbH, 70442 Stuttgart (DE)
(72) Erfinder: Niebling, Ulf, 70180 Stuttgart (DE)

(57) **Zusammenfassung**

Verfahren zur Ermittlung einer Kollisionsgefahr zwischen einem Nutzfahrzeug (10) und einer mobilen Arbeitsmaschine (30) bei einem Beladen und/oder Entladen einer Transportfläche (14) des Nutzfahrzeugs (10) mit folgenden Schritten:
- Erfassen eines Abstands zwischen dem Nutzfahrzeug (10) und der mobilen Arbeitsmaschine (30) bei einem Beladen und/oder Entladen der Transportfläche (14) des Nutzfahrzeugs (10) mittels einer Ladeeinheit (36) der mobilen Arbeitsmaschine (30); und
- Ermitteln der Kollisionsgefahr in Abhängigkeit von dem erfassten Abstand.

## Beschreibung

Die Erfindung betrifft ein Verfahren zur Ermittlung einer Kollisionsgefahr zwischen einem Nutzfahrzeug und einer mobilen Arbeitsmaschine und ein Steuergerät zur Ausführung des Verfahrens. Gegenstand der vorliegenden Erfindung ist auch ein Computerprogramm.

### Stand der Technik

Aus der DE 10 2013 018 543 A1 ist ein Fahrerassistenzsystem für ein Fahrzeug, insbesondere ein Nutzfahrzeug, mit einer Aufnahmeeinheit, einer Berechnungseinheit und einer Wiedergabeeinheit bekannt. Die Berechnungseinheit ist dazu angepasst, von der Aufnahmeeinheit erhaltene Daten im Hinblick auf Kollisionsobjekte auszuwerten und beim Erfassen eines Kollisionsobjekts das Ausgeben einer Warnung an den Fahrer des Fahrzeugs zu veranlassen und/oder einen Eingriff in die Steuerung des Fahrzeugs vorzunehmen.

### Offenbarung der Erfindung

Gegenstand der vorliegenden Erfindung ist ein Verfahren zur Ermittlung einer Kollisionsgefahr zwischen einem Nutzfahrzeug und einer mobilen
Arbeitsmaschine bei einem Beladen und/oder Entladen einer Transportfläche des Nutzfahrzeugs mit folgenden Schritten:
- Erfassen eines Abstands zwischen dem Nutzfahrzeug und der mobilen Arbeitsmaschine bei einem Beladen und/oder Entladen der Transportfläche des Nutzfahrzeugs mittels einer Ladeeinheit der mobilen Arbeitsmaschine; und
- Ermitteln der Kollisionsgefahr in Abhängigkeit von dem erfassten Abstand.

Gegenstand der vorliegenden Erfindung ist ferner ein Steuergerät zur Ausführung des Verfahrens sowie ein Speichermedium und ein Computerprogramm.

Unter einem Nutzfahrzeug kann im Rahmen der vorliegenden Erfindung ein Kraftfahrzeug verstanden werden, das zum Transport eines Transportgutes ausgebildet ist. Das Nutzfahrzeug kann zum Beispiel ein Muldenkipper, ein Sattelkipper, ein Kippanhänger, ein Vorderkipper oder ein Abrollkipper sein. Zum Transport des Transportguts weist das Nutzfahrzeug eine Transportfläche beziehungsweise ein Transportvolumen auf. Die Transportfläche beziehungsweise das Transportvolumen kann eine Mulde eines Muldenkippers oder ein Container wie eine Absetzmulde oder eine Pritsche sein. Das Transportgut kann beispielsweise Schüttgut wie Kies, Bitumen oder Gestein sein. Alternativ kann es sich bei dem Transportgut auch um festes Transportgut handeln, das zum Beispiel auf Paletten angeordnet ist.

Unter einer mobilen Arbeitsmaschine kann im Rahmen der vorliegenden Erfindung ein Fahrzeug, insbesondere eine bewegbare Arbeitsmaschine, verstanden werden, die ausgebildet ist, ein Transportgut zu verladen. Die mobile Arbeitsmaschine kann beispielsweise ein Bagger, ein Radlader, ein Schwenklader, ein Teleskoplader oder ein Flurförderzeug wie ein Gabelstapler sein. Zum Verladen des Transportguts weist die mobile Arbeitsmaschine eine Ladeeinheit auf. Bei der Ladeeinheit kann es sich um einen Arbeitsarm oder eine Hubeinheit mit Anbaugerät handeln. Die mobile Arbeitsmaschine ist ausgebildet, eine räumliche Position der Ladeeinheit zu verändern, um eine Transportfläche eines Nutzfahrzeugs zu beladen und/oder zu entladen.

Unter einer Kollisionsgefahr kann im Rahmen der vorliegenden Erfindung eine Gefahr für eine Kollision beziehungsweise einen Zusammenstoß verstanden werden. Hierbei kann unter der Kollisionsgefahr ein Maß für die Kollisionsgefahr beziehungsweise ein Gefahrenmaß für die Kollision verstanden werden. Bei einem Beladen und/oder Entladen einer Transportfläche eines Nutzfahrzeugs mittels einer Ladeeinheit einer mobilen Arbeitsmaschine hängt die Kollisionsgefahr von einem Abstand des Nutzfahrzeugs und der mobilen Arbeitsmaschine ab. Unter einem Abstand kann im Rahmen der vorliegenden Erfindung eine Entfernung zwischen dem Nutzfahrzeug und der mobilen Arbeitsmaschine verstanden werden, die für eine Ermittlung einer Kollisionsgefahr zwischen den Fahrzeugen relevant ist. Der Abstand kann insbesondere der Abstand zwischen dem Nutzfahrzeug und einer Ladeeinheit der mobilen Arbeitsmaschine sein. Denkbar ist, dass der Abstand ein Abstand zwischen der Ladeeinheit der mobilen Arbeitsmaschine und einem Chassis oder einer Begrenzungsfläche der Ladefläche des Nutzfahrzeugs ist. Hierbei kann sich die ermittelte Kollisionsgefahr beziehungsweise das Gefahrenmaß für die Kollision kontinuierlich mit kleiner werdendem Abstand erhöhen. Alternativ kann sich die ermittelte Kollisionsgefahr beziehungsweise das Gefahrenmaß für die Kollision sprunghaft erhöhen, wenn ein oder mehrere definierte Sicherheitsabstände zwischen der mobilen Arbeitsmaschine und dem Nutzfahrzeug unterschritten werden. Denkbar ist, dass ein definierter Sicherheitsabstand zwischen der Ladeeinheit und dem Nutzfahrzeug gleich oder verschieden von einem definierten Sicherheitsabstand zwischen einem Chassis der mobilen Arbeitsmaschine und dem Nutzfahrzeug ist. Ferner kann die ermittelte Kollisionsgefahr von einer Relativposition und/oder einer Relativgeschwindigkeit zwischen dem Nutzfahrzeug und der mobilen Arbeitsmaschine, insbesondere der Ladeeinheit der mobilen Arbeitsmaschine, abhängen. Denkbar ist, dass die ermittelte Kollisionsgefahr beziehungsweise das Gefahrenmaß für die Kollision geringer ist, wenn die mobile Arbeitsmaschine das Nutzfahrzeug von der Seite und in einer Richtung senkrecht zu einer Fahrtrichtung des Nutzfahrzeugs belädt beziehungsweise entlädt als wenn die mobile Arbeitsmaschine das Nutzfahrzeug quer und nicht senkrecht zu der Fahrtrichtung des Nutzfahrzeugs belädt beziehungsweise entlädt. Weiter ist denkbar, dass die ermittelte Kollisionsgefahr beziehungsweise das Gefahrenmaß für die Kollision umso geringer ist, je kleiner die Relativgeschwindigkeit zwischen der mobilen Arbeitsmaschine, insbesondere dem Ladegerät der mobilen Arbeitsmaschine, und dem Nutzfahrzeug ist.

Das erfindungsgemäße Verfahren und das erfindungsgemäße Steuergerät ermöglichen ein Vermeiden einer Kollision bei einem Beladen und/oder Entladen eines Nutzfahrzeugs mittels einer mobilen Arbeitsmaschine. Durch das Ermitteln der Kollisionsgefahr beziehungsweise eines Gefahrenmaßes für die Kollision zwischen dem Nutzfahrzeug und der Arbeitsmaschine können Unachtsamkeiten des Bedieners, die zu einem Zusammenstoß der Arbeitsmaschine und des Nutzfahrzeugs führen würden, rechtzeitig erkannt werden. Somit stellen das erfindungsgemäße Verfahren und das erfindungsgemäße Steuergerät eine besonders hohe Sicherheit beim Verladen von Transportgütern sicher.

Vorteilhaft ist es, wenn das Erfassen des Abstands ein Erfassen des seitlichen Abstands zwischen dem Nutzfahrzeug und der mobilen Arbeitsmaschine bei einem in einer Fahrtrichtung des Nutzfahrzeugs seitlichen Beladen und/oder seitlichen Entladen umfasst. Unter einer seitlichen Richtung kann im Rahmen der vorliegenden Erfindung eine Richtung verstanden werden, die quer zu einer Fahrtrichtung oder einer Längsachse eines Fahrzeugs gerichtet ist. Insbesondere kann die seitliche Richtung senkrecht zu der Fahrtrichtung oder der Längsachse des Fahrzeugs sein. Unter einem seitlichen Beladen und/oder seitlichen Entladen kann folglich ein Beladen und/oder Entladen aus einer Richtung quer zu der Fahrtrichtung oder der Längsachse des Fahrzeugs verstanden werden. Insbesondere bei dem seitlichen Beladen des Nutzfahrzeugs mittels der mobilen Arbeitsmaschine handelt es sich um ein beispielsweise auf Baustellen häufig und bevorzugt ausgeführtes Verfahren. Hierbei steht das Nutzfahrzeug ausgerichtet entlang einer ersten Achse. Die mobile Arbeitsmaschine nähert sich dem Nutzfahrzeug seitlich, vorzugsweise ausgerichtet entlang einer zweiten zu der ersten Achse senkrechten Achse, um das Nutzfahrzeug seitlich mit einem Transportgut zu beladen. Zum Beispiel besteht bei einem seitlichen Beladen eines Muldenkippers mit einem Radlader eine erhöhte Gefahr sowohl für eine Kollision einer Schaufel des Radladers mit einer seitlichen Begrenzungsfläche einer Mulde des Muldenkippers als auch für eine Kollision eines Vorderwagens des Radladers mit einem Chassis des Muldenkippers. Ein seitliches Beladen und Entladen kann auch bei auf Paletten angeordnetem Transportgut vorteilhaft sein, um beispielsweise ein Nutzfahrzeug nur teilweise zu beladen oder teilweise zu entladen. Durch diese Ausgestaltung kann eine Kollision zwischen dem Nutzfahrzeug und der mobilen Arbeitsmaschine bei dem seitlichen Beladen und/oder seitlichen Entladen verhindert werden.

Vorteilhaft ist es auch, wenn das Erfassen des Abstands zwischen dem Nutzfahrzeug und der mobilen Arbeitsmaschine mittels einer Sensoreinheit erfolgt, wobei die Sensoreinheit an dem Nutzfahrzeug und/oder an der mobilen Arbeitsmaschine angeordnet ist. Die Sensoreinheit ist ausgebildet, den Abstand und eine Veränderung des Abstands zwischen dem Nutzfahrzeug und der mobilen Arbeitsmaschine präzise zu erfassen. Weist die mobile Arbeitsmaschine keine zur Erfassung des Abstands verwendbare Sensoreinheit auf, hat die Beladung beziehungsweise Entladung des Nutzfahrzeugs mittels der mobilen Arbeitsmaschine von der Seite zu erfolgen, auf der zumindest Teile der Sensoreinheit des Nutzfahrzeugs angeordnet sind. Dadurch kann die Kollisionsgefahr zuverlässig und frühzeitig ermittelt werden.

Besonders vorteilhaft ist es, wenn die Sensoreinheit an einem in einer Fahrtrichtung des Nutzfahrzeugs seitlichen Teil der Außenfläche des Nutzfahrzeugs und/oder an einem in Fahrtrichtung vorderen Bereich der mobilen Arbeitsmaschine angeordnet ist. Denkbar ist, dass die Sensoreinheit an einem seitlichen Teil des Chassis' oder der Karosserie des Nutzfahrzeugs oder einem seitlichen Teil der seitlichen Begrenzungsfläche der Transportfläche angeordnet ist. Denkbar ist auch, dass die Sensoreinheit im vorderen Bereich der mobilen Arbeitsmaschine an einer Ladeeinheit wie beispielsweise an einer Gabel eines Gabelstaplers oder einem Chassis oder einem Vorderwagen der mobilen Arbeitsmaschine angeordnet ist. Durch diese Ausgestaltung kann bei einem seitlichen Beladen und/oder Entladen des Nutzfahrzeugs mittels der mobilen Arbeitsmaschine der Abstand zwischen dem Nutzfahrzeug und der mobilen Arbeitsmaschine präzise erfasst werden.

Hierbei ist es von Vorteil, wenn die Sensoreinheit eine optische und/oder akustische und/oder radarbasierte Sensoreinheit ist. Das heißt, mit anderen Worten, dass die Sensoreinheit ausgebildet ist, den Abstand zwischen dem Nutzfahrzeug und der mobilen Arbeitsmaschine optisch und/oder akustisch und/oder radarbasiert zu erfassen. Die Sensoreinheit kann zum Beispiel ein Laserscanner, eine Kamera, einen Ultraschallsensor, einen Radarsensor oder eine Kombination der genannten Sensoren aufweisen. Dadurch ist eine schnelle und robuste Erfassung des Abstandes möglich. Denkbar ist, dass es sich bei der Sensoreinheit um eine bestehende Sensoreinheit des Nutzfahrzeugs oder der mobilen Arbeitsmaschine handelt. Beispielsweise kann die bestehende Sensoreinheit bereits zur Verwendung für ein Fahrerassistenzsystem wie einen Abbiegeassistent an dem Nutzfahrzeug angeordnet sein. Die Sensoreinheit kann beispielsweise eine Kamera eines Spiegelersatzsystems sein. Dadurch ist das Verfahren besonders wirtschaftlich auszuführen.

Weiterhin ist es vorteilhaft, wenn das Verfahren einen Schritt des Übertragens einer Information über den erfassten Abstand und/oder über die ermittelte Kollisionsgefahr von dem Nutzfahrzeug an die mobile Arbeitsmaschine und/oder von der mobilen Arbeitsmaschine an das Nutzfahrzeug aufweist. Bevorzugt wird die Information drahtlos über ein Funksignal von dem Nutzfahrzeug an die mobile Arbeitsmaschine oder von der mobilen Arbeitsmaschine an das Nutzfahrzeug übertragen. Denkbar ist, dass das Funksignal ein Mobilfunksignal ist. Denkbar ist auch, dass bei einer Änderung des erfassten Abstands und/oder der ermittelten Kollisionsgefahr beispielsweise durch eine Relativbewegung zwischen der mobilen Arbeitsmaschine und dem Nutzfahrzeug eine Information über die Änderung des Abstands und/oder über die geänderte Kollisionsgefahr übertragen wird. Für die Übertragung der Information weisen das Nutzfahrzeug und die mobile Arbeitsmaschine geeignete Kommunikationseinheiten auf. Zum Beispiel kann die Kommunikationseinheit ein Funkgerät sein. Denkbar ist ferner, dass die Kollisionsgefahr zeitlich vor dem Übertragen der Information ermittelt wird und die ermittelte Kollisionsgefahr übertragen wird. Denkbar ist weiterhin, dass eine Information über den Abstand übertragen und die Kollisionsgefahr erst nach dem Übertragen der Information über den Abstand ermittelt wird. Hierbei kann der Abstand zwischen dem Nutzfahrzeug und der mobilen Arbeitsmaschine von einem der beiden Fahrzeuge erfasst und die Kollisionsgefahr von demselben oder dem anderen Fahrzeug ermittelt werden. Weist nur eines der beiden Fahrzeuge eine zur Erfassung des Abstands verwendbare Sensoreinheit auf, ist es denkbar, dass nur das Fahrzeug mit dieser Sensoreinheit eine Übertragungseinheit für die Übertragung der Information und das Fahrzeug ohne diese Sensoreinheit lediglich eine Empfangseinheit zum Empfangen der Information aufweist. Zum Beispiel kann die Übertragungseinheit einen Funksender und die Empfangseinheit ein Funkempfänger sein. Durch diese Ausgestaltung können Bediener der Fahrzeuge frühzeitig gewarnt oder Eingriffe in die Fahrzeugsteuerung rechtzeitig erfolgen, um eine Kollision zwischen den Fahrzeugen zu verhindern.

Vorteilhaft ist es außerdem, wenn das Verfahren einen Schritt des Abgebens eines Signals aufweist, wobei das Signal
- ein Steuersignal ist, das ausgebildet ist, das Nutzfahrzeug und/oder die mobile Arbeitsmaschine in Abhängigkeit von der ermittelten Kollisionsgefahr anzusteuern, und/oder
- ein akustisches und/oder optisches und/oder haptisches Warnsignal ist, um einen Bediener des Nutzfahrzeugs und/oder der mobilen Arbeitsmaschine in Abhängigkeit von der ermittelten Kollisionsgefahr zu warnen.

Vorteilhaft ist es außerdem, wenn das Verfahren einen Schritt des Abgebens eines Signals aufweist, wobei das Signal

Besonders vorteilhaft ist es, wenn mittels des abgegebenen Steuersignals
- die Ladeeinheit der mobilen Arbeitsmaschine und/oder
- eine Warnvorrichtung und/oder einer Antriebsvorrichtung und/oder ein Bremssystem des Nutzfahrzeugs und/oder der mobilen Arbeitsmaschine in Abhängigkeit von der ermittelten Kollisionsgefahr angesteuert werden. Hierzu kann das Steuersignal von einer an einem der Fahrzeuge angeordneten Kommunikationseinheit an eines der Steuergeräte der Fahrzeuge übertragen werden. Denkbar ist, dass bei einer drohenden Kollision zwischen der mobilen Arbeitsmaschine und dem Nutzfahrzeug mittels des Steuersignals die Ladeeinheit der mobilen Arbeitsmaschine in ihrer räumlichen Höhe angehoben oder abgesenkt wird. Denkbar ist auch, dass mittels des Steuersignals die Ladeeinheit der mobilen Arbeitsmaschine entgegen der Fahrtrichtung der mobilen Arbeitsmaschine bewegt wird, wenn sich die Kollisionsgefahr zwischen den Fahrzeugen durch die Anhebung oder Absenkung der Ladeeinheit der mobilen Arbeitsmaschine nicht verringert. Denkbar ist ferner, dass mittels des Steuersignals die Ladeinheit zumindest anteilig gedreht beziehungsweise rotiert wird, um eine Kollision zwischen der Ladeinheit und dem Nutzfahrzeug zu verhindern. Weiter ist denkbar, dass mittels des Steuersignals eine Antriebsvorrichtung und/oder ein Bremssystem der mobilen Arbeitsmaschine derart angesteuert werden, dass die Fahrgeschwindigkeit der mobilen Arbeitsmaschine reduziert wird. Bei der Antriebsvorrichtung kann es sich um den Motor der mobilen Arbeitsmaschine handeln. Denkbar ist hierbei, dass eine Fortbewegung der mobilen Arbeitsmaschine zum Stillstand gebracht wird, wenn sich die Kollisionsgefahr zwischen den Fahrzeugen durch die Reduktion der Fahrgeschwindigkeit der mobilen Arbeitsmaschine nicht verringert. Ferner ist denkbar, dass mittels des Steuersignals eine akustische und/oder optische Warnvorrichtung des Nutzfahrzeugs und/oder eine akustische und/oder optische und/oder haptische Warnvorrichtung der mobilen Arbeitsmaschine derart angesteuert werden, dass ein Bediener der mobilen Arbeitsmaschine und/oder ein Bediener des Nutzfahrzeugs vor der Kollision gewarnt werden. Vorteilhaft ist es inbesondere, wenn bei einer drohenden Kollision zwischen der mobilen Arbeitsmaschine und dem Nutzfahrzeug mittels einer der genannten Warneinheit der Bediener der mobilen Arbeitsmaschine gewarnt wird, sodass der Bediener der mobilen Arbeitsmaschine selbst die Kollision zwischen den Fahrzeugen verhindern kann. Hierbei ist denkbar, dass dem Bediener der mobilen Arbeitsmaschine und/oder dem Bediener des Nutzfahrzeugs ein oder mehrere Abstände zwischen den beiden Fahrzeugen visuell, beispielsweise mittels eines Displays, dargestellt werden. Durch diese Ausgestaltung kann zum einen die Aufmerksamkeit der Bediener der Fahrzeuge auf die drohende Kollision gelenkt und Maßnahmen zur Verhinderung der Kollision durch den Bediener ergriffen werden. Zum anderen kann durch die Ansteuerung der Fahrzeuge mittels eines Steuersignals eine Kollision automatisch und ohne Eingriff der Bediener verhindert werden.

Außerdem ist es von Vorteil, wenn das Abgeben der Warnsignals mittels
- einer bestehenden akustischen und/oder optischen Warnvorrichtung des Nutzfahrzeugs und/oder
- einer bestehenden akustischen und/oder optischen und/oder haptischen Warnvorrichtung der mobilen Arbeitsmaschine erfolgt.

Bei der akustischen Warnvorrichtung des Nutzfahrzeugs und der mobilen Arbeitsmaschine kann es sich um eine Hupe beziehungsweise ein Signalhorn handeln. Die optische Warnvorrichtung kann eine Fahrzeugbeleuchtung oder Teil einer Fahrzeugbeleuchtung sein. Alternativ oder zusätzlich kann es sich bei der Warnvorrichtung um eine Anzeigeeinheit wie ein Display handeln, mittels dessen ein Bediener der mobilen Arbeitsmaschine und/oder des Nutzfahrzeugs vor der drohenden Kollision gewarnt und/oder über einen oder mehrere Abstände zwischen den Fahrzeugen informiert wird. Die haptische Warnvorrichtung kann ein Vibrationsmotor sein. Der Vibrationsmotor kann beispielsweise an einem Lenkrad oder an einem Bedienelement für die Ladeeinheit der mobilen Arbeitsmaschine angeordnet sein. Durch diese Ausgestaltung kann das Verfahren ohne Anbringung zusätzlicher Warnvorrichtungen an den Fahrzeugen ausgeführt werden.

Dieses Verfahren kann vorzugsweise in einem Computerprogramm implementiert sein, das auf einem maschinenlesbaren Speichermedium gespeichert ist. Dieses Speichermedium kann beispielsweise in einer Rechnereinheit verbaut sein, sodass die Rechnereinheit das Verfahren ausführen kann.

### Zeichnungen

Die Erfindung wird nachstehend anhand der beigefügten Zeichnungen beispielhaft näher erläutert. Es zeigen:
- Fig. 1: eine schematische Darstellung eines Muldenkippers und eines Radladers; und
- Fig. 2: ein Ablaufdiagramm eines Verfahrens zur Ermittlung einer Kollisionsgefahr.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

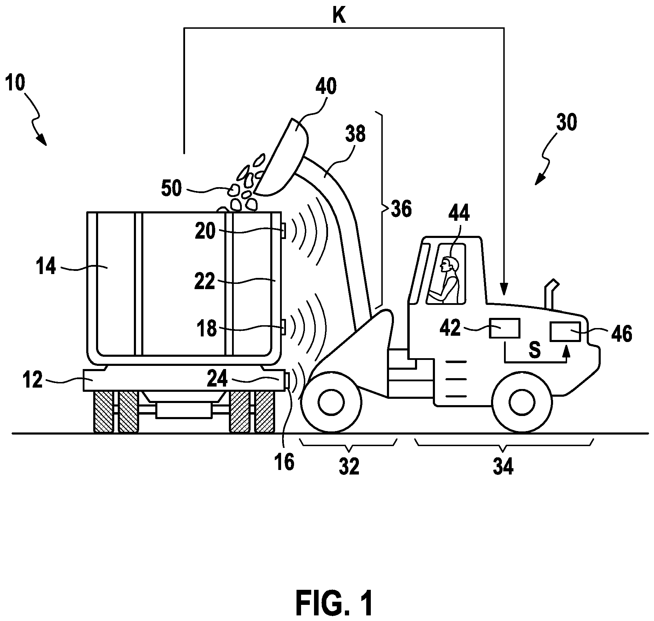

In Fig. 1 ist schematisch ein Beladen eines Nutzfahrzeuges 10 mittels einer mobilen Arbeitsmaschine 30 dargestellt. Bei dem Nutzfahrzeug 10 handelt es sich um einen Muldenkipper 10. Bei der mobilen Arbeitsmaschine 30 handelt es sich um einen Radlader 30.

Der Muldenkipper 10 weist ein Chassis 12 beziehungsweise ein Fahrgestell 12 und eine Mulde 14 als Transportfläche 14 auf. Ferner weist der Muldenkipper 10 eine Sensoreinheit mit drei Radarsensoren 16, 18, 20 und eine nicht dargestellte Rechen- und Kommunikationseinheit auf. Der Radarsensor 16 ist an einem in einer Fahrtrichtung des Muldenkippers 12 seitlichen Bereich 24 des Chassis 12 angeordnet. Die Radarsensoren 18, 20 sind an einer in der Fahrtrichtung des Muldenkippers 12 seitlichen Teilfläche 22 der Mulde 14 angeordnet.

Der Radlader 30 weist einen Vorderwagen 32 und einen Hinterwagen 34 auf. An dem Vorderwagen 32 des Radladers 30 ist eine Ladeeinheit 36 mit einem Hubrahmen 38 und einer Ladeschaufel 40 angeordnet. Ferner weist der Radlader einen Funkempfänger 42 auf.

Der Radlader 30 ist ausgebildet, mittels der Ladeschaufel 40 Kies 50 aufzunehmen und den Muldenkipper 10 mit dem aufgenommenen Kies 50 zu beladen. Zum Beladen nähert sich der Radlader 30 dem stehenden Muldenkipper 10 aus einer in Fahrtrichtung des Muldenkippers 10 rechten Seite. Hierbei hebt der Radlader 30 die Ladeschaufel 40 mittels des Hubrahmens 38 so weit an, dass der Kies 50 über die seitliche Teilfläche 22 der Mulde 14 in die Mulde 14 beziehungsweise auf die Transportfläche 14 geladen werden kann.

Beim Beladen des Muldenkippers 10 mittels des Radladers 30 besteht eine Kollisionsgefahr sowohl zwischen der Ladeeinheit 36 und der seitlichen Teilfläche 22 des Muldenkippers 10 als auch zwischen dem Vorderwagen 32 des Radladers 30 und dem seitlichen Bereich 24 des Chassis 12 des Muldenkippers 10.

Der Muldenkipper 10 ist ausgebildet, mittels der Radarsensoren 18, 20 Abstände zwischen der Ladeeinheit 36 des Radladers 30 und der seitlichen Teilfläche 22 der Mulde 14 zu erfassen. Zudem ist der Muldenkipper 10 ausgebildet, mittels des Radarsensors 16 einen Abstand zwischen dem Vorderwagen 32 des Radladers 30 und dem seitlichen Bereich des Chassis 12 des Muldenkippers 10 zu erfassen.

Der Muldenkipper 10 ist ausgebildet, mittels einer nicht dargestellten Recheneinheit eine Kollisionsgefahr zwischen dem Muldenkipper 10 und dem Radlader 30 in Abhängigkeit von den erfassten Abständen zu ermitteln.

Weiter ist der Muldenkipper 10 ausgebildet, mittels einer nicht dargestellten Hupe in Abhängigkeit von der ermittelten Kollisionsgefahr ein Warnsignal (S) zu erzeugen, um einen Bediener 44 des Radladers 30 vor einer Kollision des Radladers 30 mit dem Muldenkipper 10 zu warnen.

Ferner ist der Muldenkipper 10 ausgebildet, mittels eines nicht dargestellten Funksenders eine Information (K) über die ermittelte Kollisionsgefahr an den Funkempfänger 42 des Radladers 30 zu übertragen.

Der Funkempfänger 42 des Radladers 30 ist ausgebildet, in Abhängigkeit von der übertragenen Information (K) über die ermittelte Kollisionsgefahr ein Steuersignal (S) an ein Antriebssteuergerät 46 des Radladers 30 abzugeben. Mittels des Steuersignals (S) wird der Radlader 30 in seiner Vorwärtsbewegung auf den Muldenkipper 10 gebremst beziehungsweise gestoppt, um eine Kollision des Radladers 30 mit dem Muldenkipper 10 zu verhindern.

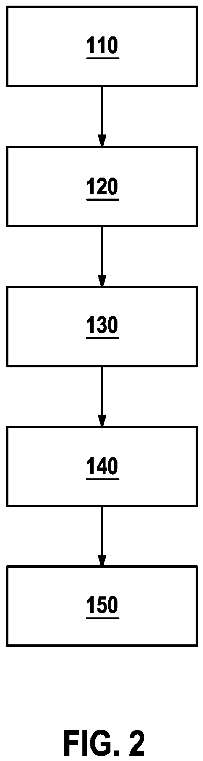

Fig. 2 zeigt ein Ablaufdiagramm eines Verfahrens zur Ermittlung einer Kollisionsgefahr zwischen dem Muldenkipper 10 und dem Radlader 30. Das Verfahren ist in seiner Gesamtheit mit dem Bezugszeichen 100 versehen.

In Schritt 110 wird ein Abstand zwischen dem Muldenkipper 10 und dem Radlader 30 bei einem Beladen der Mulde 14 des Muldenkippers 10 mittels der an dem Muldenkipper angeordneten Radarsensoren 16, 18, 20 erfasst.

In Schritt 120 wird mittels der an dem Muldenkipper 10 angeordneten Recheneinheit die Kollisionsgefahr zwischen dem Muldenkipper 10 und dem Radlader 30 in Abhängigkeit von dem erfassten Abstand ermittelt.

In Schritt 130 wird die Information (K) über die ermittelte Kollisionsgefahr mittels eines Funksignals von dem Funksender des Muldenkippers 10 an einen Funkempfänger 42 des Radladers 30 übertragen.

Zeitgleich wird in Schritt 140 mittels einer Hupe des Muldenkippers 10 und einer Warnlampe des Radladers 30 der Bediener 44 des Radladers 30 vor der Kollision mit dem Muldenkipper 10 gewarnt.

In Schritt 150 wird das Antriebssteuergerät 46 des Radladers 30 mittels eines Steuersignals (S) von dem Funkempfänger 42 derart angesteuert, dass der Radlader 30 zum Stillstand kommt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zur Ermittlung einer Kollisionsgefahr zwischen einem Nutzfahrzeug (10) und einer mobilen Arbeitsmaschine (30) bei einem Beladen und/oder Entladen einer Transportfläche (14) des Nutzfahrzeugs (10) mit folgenden Schritten:
- Erfassen (110) eines Abstands zwischen dem Nutzfahrzeug (10) und der mobilen Arbeitsmaschine (30) bei einem Beladen und/oder Entladen der Transportfläche (14) des Nutzfahrzeugs (10) mittels einer Ladeeinheit (36) der mobilen Arbeitsmaschine (30); und
- Ermitteln (120) der Kollisionsgefahr in Abhängigkeit von dem erfassten Abstand.

2. Verfahren (100) nach Anspruch 1, **dadurch gekennzeichnet, dass** das Erfassen des Abstands ein Erfassen des seitlichen Abstands zwischen dem Nutzfahrzeug (10) und der mobilen Arbeitsmaschine (30) bei einem in einer Fahrtrichtung des Nutzfahrzeugs (10) seitlichen Beladen und/oder seitlichen Entladen umfasst.

3. Verfahren (100) nach Anspruch 1 oder 2, **dadurch gekennzeichnet, dass** das Erfassen des Abstands zwischen dem Nutzfahrzeug (10) und der mobilen Arbeitsmaschine (30) mittels einer Sensoreinheit (16, 18, 20) erfolgt, wobei die Sensoreinheit (16, 18, 20) an dem Nutzfahrzeug (10) und/oder an der mobilen Arbeitsmaschine (30) angeordnet ist.

4. Verfahren (100) nach Anspruch 3, **dadurch gekennzeichnet, dass** die Sensoreinheit (16, 18, 20) an einem in einer Fahrtrichtung des Nutzfahrzeugs (10) seitlichen Teil (22) der Außenfläche des Nutzfahrzeugs und/oder an einem in Fahrtrichtung vorderen Bereich (32) der mobilen Arbeitsmaschine (30) angeordnet ist.

5. Verfahren (100) nach Anspruch 3 oder 4, **dadurch gekennzeichnet, dass** die Sensoreinheit (16, 18, 20) eine optische und/oder akustische und/oder radarbasierte Sensoreinheit (16, 18, 20) ist.

6. Verfahren (100) nach einem der vorhergehenden Ansprüche,
**gekennzeichnet durch** einen Schritt des Übertragens (130) einer Information (K) über den erfassten Abstand und/oder über die ermittelte Kollisionsgefahr von dem Nutzfahrzeug (10) an die mobile Arbeitsmaschine (30) und/oder von der mobilen Arbeitsmaschine (30) an das Nutzfahrzeug (10).

7. Verfahren (100) nach einem der vorhergehenden Ansprüche,
**gekennzeichnet durch** einen Schritt des Abgebens (140) eines Signals (S), wobei das Signal
- ein Steuersignal (S) ist, das ausgebildet ist, das Nutzfahrzeug (10) und/oder die mobile Arbeitsmaschine (30) in Abhängigkeit von der ermittelten Kollisionsgefahr anzusteuern, und/oder
- ein akustisches und/oder optisches und/oder haptisches Warnsignal (S) ist, um einen Bediener (44) des Nutzfahrzeugs (10) und/oder der mobilen Arbeitsmaschine (30) in Abhängigkeit von der ermittelten Kollisionsgefahr zu warnen.

8. Verfahren (100) nach Anspruch 7, **dadurch gekennzeichnet, dass** mittels des abgegebenen Steuersignals (S)
- die Ladeeinheit (36) der mobilen Arbeitsmaschine (30) und/oder
- eine Warnvorrichtung und/oder einer Antriebsvorrichtung und/oder ein Bremssystem des Nutzfahrzeugs (10) und/oder der mobilen Arbeitsmaschine (30)
in Abhängigkeit von der ermittelten Kollisionsgefahr angesteuert werden.

9. Verfahren (100) nach Anspruch 7 oder 8, **dadurch gekennzeichnet, dass** das Abgeben der Warnsignals (S) mittels
- einer bestehenden akustischen und/oder optischen Warnvorrichtung des Nutzfahrzeugs und/oder
- einer bestehenden akustischen und/oder optischen und/oder haptischen Warnvorrichtung der mobilen Arbeitsmaschine (30) erfolgt.

10. Computerprogramm, das eingerichtet ist, das Verfahren (100) nach einem der Ansprüche 1 bis 9 auszuführen.

11. Maschinenlesbares Speichermedium, auf dem das Computerprogramm nach Anspruch 10 gespeichert ist.

12. Steuergerät (10), das eingerichtet ist, eine Kollisionsgefahr zwischen einem Nutzfahrzeug (10) und einer mobilen Arbeitsmaschine (30) bei einem Beladen und/oder Entladen einer Transportfläche (14) des Nutzfahrzeugs (10) in Abhängigkeit von einem erfassten Abstand zwischen dem Nutzfahrzeug (10) und der mobilen Arbeitsmaschine (30) zu ermitteln, wobei der Abstand zwischem dem Nutzfahrzeug (10) und der mobilen Arbeitsmaschine (30) bei einem Beladen und/oder Entladen der Transportfläche (14) des Nutzfahrzeugs (10) mittels einer Ladeeinheit (36) der mobilen Arbeitsmaschine (30) erfasst wird.
